# DEMANDE DE BREVET EUROPEEN

(11) **EP 0 985 578 A1**
(43) Date de publication de la demande: **15.03.2000**
(21) Numéro de dépôt: 99420191.1
(22) Date de dépôt: 10.09.1999
(51) Int. Cl.: B60Q 1/14

(54) **Centrale de pilotage des feux d'un vehicule**

(30) Priorité: 10.09.1998 FR 9811452
(71) Demandeur: Mdc Sarl, 73460 Frontenex (FR)
(72) Inventeur: Moris, Claude, 73200 Albertville (FR); Moris, Damien, 73200 Albertville (FR)
(74) Mandataire: Vuillermoz, Bruno

(57) **Abrégé**

La centrale de pilotage pour la gestion automatique des feux d'un véhicule comporte des moyens de comparaison permettant d'analyser la luminosité extérieure par rapport à des éclairements de références formant des seuils de basculement permettant soit l'allumage, soit l'extinction des différents feux du véhicule et des moyens d'analyse et de gestion de l'état des feux du véhicule en fonction de la position sélectionnée sur le dispositif de commande mécanique connu en soi.

## Description

La présente invention est relative à une centrale de pilotage des feux d'un véhicule lorsque la lumière ambiante extérieure est insuffisante pour permettre au conducteur la conduite dudit véhicule.

On connaît d'après le brevet suisse n° 505 715, une centrale de pilotage automatique des phares d'un véhicule routier, commandant au moins le passage des grands phares ou phares aux feux de croisement dits codes et vice versa, en fonction de l'intensité de la lumière captée par un détecteur de commande dirigé vers l'avant du véhicule.

On connaît d'autres dispositifs de pilotage automatiques qui comportent un ou plusieurs détecteurs de lumière agissant, non seulement sur les feux dits phares du véhicule routier, mais également sur les feux de croisement dits codes et/ou sur les feux de position ou veilleuses de façon à enclencher les feux de position ou de croisement à la tombée de la nuit. Certains dispositifs de pilotage sont même capables de n'enclencher les feux de croisement que lorsque l'intensité de la lumière ambiante est inférieure à celle qui permet de rouler en ne maintenant enclenchés que les feux de position.

On constate que les dispositifs de pilotage automatiques de l'art antérieur ne permettent pas au conducteur de rester maître de l'action sur les feux du véhicule par l'intermédiaire du dispositif de commande mécanique dits commodos. En effet, les dispositifs de pilotage automatiques gérant, par exemple, le passage des feux dits phares à ceux de croisement des véhicules routiers, ne laissent pas au conducteur la possibilité d'enlever ou de mettre la position des feux dits phares avec les commandes connues en soi.

En outre, on remarque que les dispositifs de pilotage automatiques utilisés pour l'éclairage des feux d'un véhicule routier ne présentent pas une grande fiabilité et réactivité vis à vis des brusques variations de l'éclairage ambiant extérieur tel que, par exemple, l'entrée du véhicule routier dans un tunnel. Ceci est principalement dû au fait que les dispositifs de pilotage utilisent, afin d'éliminer les phénomènes parasites, telles que les ombres résultants des feuillages des arbres, les éclairages citadins, etc., une temporisation relativement importante entre la détection d'une faible luminosité et l'action effective.

La centrale de pilotage suivant la présente invention vise à perfectionner le dispositif de pilotage automatique protégé par le demandeur et décrit dans une demande de brevet français n° 97 12732.

Egalement, la centrale de pilotage automatique suivant l'invention vise à remédier aux inconvénients décrits ci-dessus à savoir, par exemple, qu'il offre au conducteur une réelle souplesse de fonctionnement puisqu'il réagit vis à vis dudit conducteur de la même manière que les dispositifs de commande mécaniques dits commodos.

En effet, la centrale de pilotage automatique des feux d'un véhicule suivant l'invention laisse le conducteur toujours maître de l'action sur les feux du véhicule par l'intermédiaire du commodo.

De plus, la centrale de pilotage automatique suivant la présente invention comporte une réactivité autorisant l'éclairage quasi instantané à l'entrée des tunnels tout en ayant une grande fiabilité face aux parasites de l'éclairement ambiant.

En outre, la centrale de pilotage suivant l'invention est capable de gérer sur un véhicule routier, l'éclairage des feux de position, des feux de croisement, mais également le contrôle des feux dits phares avec le basculement automatique des feux dits phares à ceux de croisement.

On constate que les avantages de la centrale de pilotage automatique suivant la présente invention sont dus à une nouvelle structure, à savoir un filtrage analogique et optique des informations relatives à l'éclairement ambiant extérieur et de deux seuils de basculement, un premier seuil définissant l'éclairage propre à la mise en marche des feux, et un deuxième seuil relatif à l'arrêt de l'éclairage du véhicule.

La centrale de pilotage pour la gestion automatique des feux d'un véhicule suivant la présente invention comporte des moyens de comparaison permettant d'analyser la luminosité extérieure par rapport à des éclairements de références formant des seuils de basculement permettant, soit l'allumage, soit l'extinction des différents feux du véhicule et des moyens d'analyse et de gestion de l'état des feux du véhicule en fonction de la position sélectionnée sur le dispositif de commande mécanique connu en soi.

La centrale de pilotage pour la gestion automatique des feux d'un véhicule suivant la présente invention comprend des moyens de comparaison qui sont constitués d'un premier module qui génère, après filtrage analogique et optique, une tension ou un courant variable, d'un second module qui génère une tension ou un courant réglable par l'utilisateur afin de définir l'éclairement de référence pour l'allumage des feux du véhicule et d'un troisième module qui compare les tensions ou les courants issus des deux premier module pour actionner un quatrième module muni d'une interface de puissance pour l'allumage des feux.

La centrale de pilotage pour la gestion automatique des feux d'un véhicule suivant la présente invention comprend des moyens de comparaison qui sont constitués d'un premier module qui génère, après filtrage analogique et optique, une tension ou un courant variable proportionnel à la luminosité extérieure et de l'état des feux qui sont, soit allumés, soit éteins, pour créer des seuils de déclenchement de l'allumage, d'un second module qui génère une tension ou un courant réglable par l'utilisateur afin de définir l'éclairement de référence pour l'allumage des feux de position du véhicule, d'un cinquième module qui génère une tension ou un courant réglable par l'utilisateur permettant de définir l'éclairement de référence pour l'allumage des feux de croisement du véhicule, et d'un troisième module qui compare les tensions ou les courants pour actionner un quatrième module muni d'une interface de puissance permettant l'allumage des feux de position et des feux de croisement.

La centrale de pilotage pour la gestion automatique des feux d'un véhicule suivant la présente invention comprend des moyens d'analyse et de gestion qui sont constitués d'un module qui informe la position sélectionnée correspondant à celle des feux dits phares sur le dispositif de commande mécanique, un module qui analyse les données du module pour bloquer ou débloquer l'allumage des feux dits phares à condition que la centrale de pilotage a enclenchée automatiquement et précédemment les feux de croisement, un module qui gère automatiquement le passage des feux dits phares à ceux de croisement et un module qui commute les courants nécessaires à l'allumage des feux dits phares.

La centrale de pilotage pour la gestion automatique des feux d'un véhicule suivant la présente invention comprend un module qui est constitué d'un capteur capable de détecter si le dispositif de commande mécanique a été sélectionné par l'utilisateur en position des feux dits phares.

La centrale de pilotage pour la gestion automatique des feux d'un véhicule suivant la présente invention comprend un module qui est constitué d'un circuit mémoire ou bascule permettant de bloquer ou débloquer l'allumage des feux dits phares.

La centrale de pilotage pour la gestion automatique des feux d'un véhicule suivant la présente invention comprend un module qui est constitué d'un ensemble de transistors et relais permettant de réaliser l'interface de puissance avec les feux dits phares.

La centrale de pilotage pour la gestion automatique des feux d'un véhicule suivant la présente invention comprend un module qui est constitué d'un module qui génère une tension proportionnelle à la luminosité ambiante extérieure à l'avant du véhicule, un module qui génère une tension proportionnelle à la luminosité ambiante extérieure provenant du véhicule venant en sens inverse ou celui précèdent le véhicule équipé de la centrale de pilotage, un module permettant de mettre en forme le signal du module, un autre module permettant de mettre en forme le signal d'un autre module, et un module permettant d'effectuer une comparaison différentielle des signaux issus des modules afin d'établir si les feux dits phares doivent être allumés ou éteins.

La centrale de pilotage pour la gestion automatique des feux d'un véhicule suivant la présente invention comprend un module qui est constitué d'un étage de filtrage, d'un étage de mise en forme et d'un filtrage optique.

La centrale de pilotage pour la gestion automatique des feux d'un véhicule suivant la présente invention comprend un module qui est constitué d'un étage de filtrage, de la prise en compte de l'état des feux dits phares et d'un ajustement de sensibilité.

La centrale de pilotage pour la gestion automatique des feux d'un véhicule suivant la présente invention comprend un module qui est constitué d'un amplificateur différentiel LM324 ou équivalent.

La description qui va suivre au regard des dessins annexés, donnés à titre d'exemples non limitatifs, permettra de mieux comprendre l'invention, les caractéristiques qu'elle présente et les avantages qu'elle est susceptible de procurer :

Figure 1 est une vue schématique illustrant les modules pilotant les feux de position et de croisement.

Figure 2 est une vue schématique illustrant le principe de gestion des feux de route dits phares.

Figure 3 est une vue schématique exposant le principe du passage phares/codes.

Figure 4 est une vue représentant un schéma de montage électronique et de branchement électrique de la centrale de pilotage suivant la présente invention.

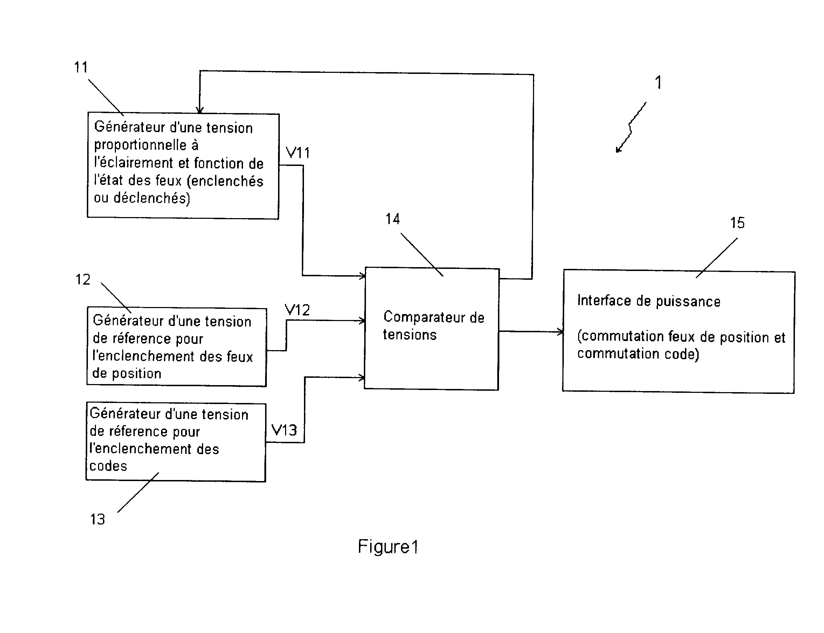

En figure 1 est montrée une centrale de pilotage automatique 1 des feux d'un véhicule tel que camion, voiture, moto, avion, bateau, transport en commun, etc.

Dans notre exemple de réalisation, la centrale de pilotage 1 est prévue pour allumer les feux d'une automobile, à savoir les feux de position (veilleuses), les feux de croisement (codes).

La centrale de pilotage 1 comprend un premier module 11 qui génère une tension ou courant variable V11 proportionnel à la luminosité ambiante extérieure et fonction de l'état des feux du véhicule (allumés ou éteins).

Le module 11 est constitué d'un générateur de tension ou de courant qui est proportionnel à la luminosité ainsi qu'un étage de filtrage du signal.

La centrale de pilotage 1 comporte un second module 12 qui génère une tension ou un courant V12 réglable par l'utilisateur afin de définir l'éclairement d'enclenchement des feux de position (veilleuses) d'un véhicule.

Les modules 11 et 12 sont reliés à un troisième module 14 qui compare les tensions ou courants V11 et V12 entre eux.

La centrale de pilotage 1 comporte un quatrième module 15 qui est en fait une interface de puissance reliée au module 14 afin de commander les courants suffisants pour allumer les feux du véhicule.

Lorsque la centrale de pilotage 1 est prévue pour une automobile, il comprend un cinquième module 13 qui génère une tension ou un courant V13 réglable par l'utilisateur qui définit l'éclairement de référence pour l'enclenchement des feux de croisement (codes). Dans ces conditions le module 14 compare la tension ou courant V11 aux tensions ou courants V12 et V13.

Il est intéressant de noter que cette structure mise au point, permet d'imaginer la mise en place et la comparaison de plusieurs autres générateurs de tension de référence avec le même et unique générateur de tension proportionnelle à l'éclairement, sans pour autant altérer la fonctionnalité et la fiabilité du dispositif.

La centrale de pilotage 1 permet donc, lorsque la tension ou le courant V11 est supérieur (ou inférieur) à V12 ou à V13, par l'intermédiaire du module 14 via le module 15, la mise en marche des feux de position (veilleuses) ou des feux de croisement (codes). De plus, le module 14 renseigne le module 11 de l'état des feux (activés ou désactivés) et permet ainsi de définir de nouveaux seuils d'extinction des différents feux.

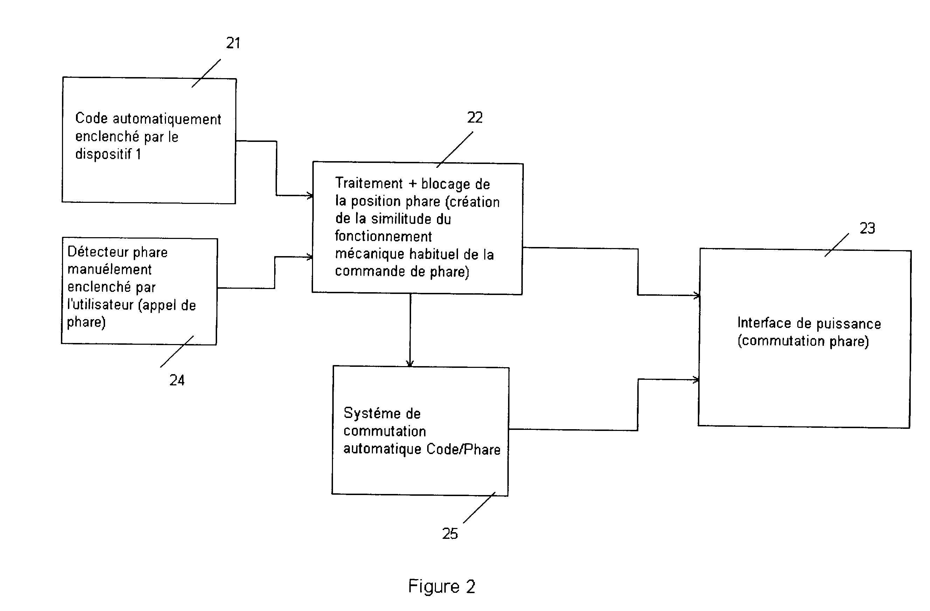

La figure 2 illustre le principe employé pour procurer à la centrale de pilotage des feux 1, une similitude de fonctionnement avec les dispositifs mécaniques actuels dits commodos, à savoir:
- Lorsque la centrale de pilotage 1 active automatiquement les feux de position (veilleuses) le conducteur effectuant une impulsion sur le commodo des phares réalise un « appel de phares ».
- Lorsque la centrale de pilotage 1 active automatiquement les codes (feux de croisement) le conducteur effectuant une impulsion sur le commodo des phares, retrouve le comportement du système mécanique, c'est à dire le verrouillage de la position phare.
- Lorsque le conducteur réalise une nouvelle impulsion sur le commodo des feux dits phares, la centrale de pilotage 1 remet les feux dans la position codes (feux de croisement).

Le système automatique et électronique de verrouillage des feux comporte également un système de commutation automatique codes/phares, dès que les phares peuvent constituer un facteur gênant pour les autres usagés.

La gestion des phares représentée en figure 2 comporte un module 24 capable de détecter l'action mécanique du conducteur sur le commodo phares ou feux dits phares.

Un module 22 gère l'information du module 24 lorsque celle-ci est validée par le dispositif 21, c'est à dire lorsque la centrale 1 précédemment définie a activé les feux de croisement (codes).

Le module 22 permet alors le blocage ou le déblocage des phares et l'activation du module 25.

Le module 25 réalise la fonction de passage automatique codes/phares.

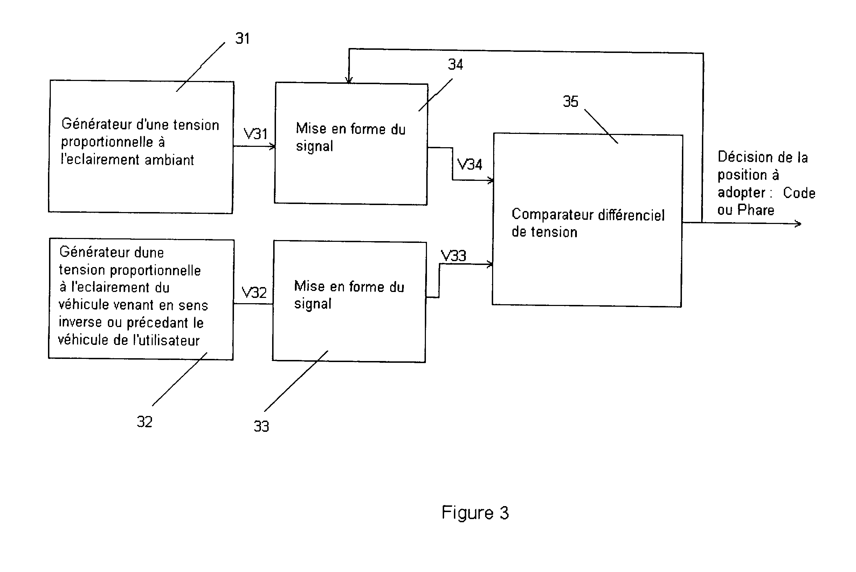

La figure 3 détaille le module 25 correspondant au système automatique de commutation phares/codes.

Cette fonction est réalisée par un module 31 qui est constitué d'un générateur de tension V31 proportionnelle à l'éclairement ambiant à l'avant du véhicule.

Le module 35 comprend :
- Un module 32 qui est constitué d'un générateur de tension V32 proportionnelle à l'éclairement du véhicule précédent ou venant en face du véhicule équipé de la centrale de pilotage 1,
- Un module 33 qui permet de mettre en forme le signal du module 32 par un filtrage analogique et optique et génère la tension V33,
- Un module 34 qui permet la mise en forme du signal issu du module 31 par un filtrage et la connaissance de l'état des phares (allumés ou éteins). Le module 34 génère une tension V34,
- Et un module 35 qui est capable de réaliser une comparaison différentielle des deux tensions V34 et V33, c'est à dire sans référence fixe.

Ainsi, lorsque le véhicule équipé de la centrale de pilotage 1 des feux, précède ou croise un autre véhicule, la tension V33, par une plus grande sensibilité du module 32, est différente de la tension V34 qui permet d'adapter la précision du système aux conditions de visibilité variant avec l'atmosphère rencontrée.

Le module 35 peut alors désactiver automatiquement les feux dits phares au profit des feux de croisement (codes).

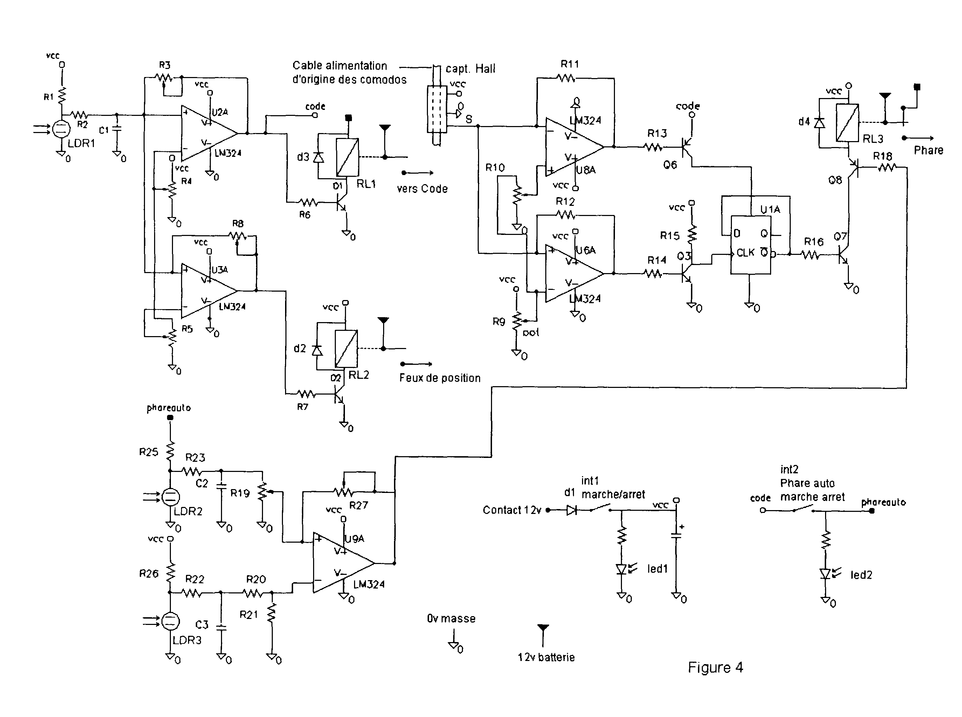

En figure 4 on a représenté les différents circuits électroniques constituant la centrale de pilotage des feux 1, et plus particulièrement les modules précédemment décrits.

Le module 11 est réalisé par les résistances R1, R2, les potentiomètres R3, R8, le condensateur C1 et le capteur LDR1 dont la résistance diminue avec l'éclairement.

Les modules 12 et 13 sont constitués de deux potentiomètres R4 et R5 dont les valeurs maximales et la disposition garantie toujours la bonne séquence d'allumage des feux, feux de position, puis codes.

Le module 14 est réalisé à l'aide d'une partie d'un composant standard LM324 qui peut être remplacé par tout équivalent.

Le module 15 est constitué par un transistor Q2, une résistance R7, une diode de roue libre D2 et un relais RL2 pour commander les feux d'un véhicule, les feux de position (veilleuses) d'un véhicule routier.

Dans ce dernier cas, le module 15 est également constitué d'un transistor Q1, une résistance R6, une diode D3 et un relais RL1 pour le fonctionnement des codes.

Pour reprendre les modules de la figure 2, le module 24 est réalisé à l'aide d'un capteur à « effet hall » installé sur le câble général d'alimentation des commodos et d'une partie du composant standard LM324 ou autre équivalent, des résistances R11, R12, potentiomètres R10, R9, réalisant la mise en forme du signal du capteur.

Le module 24 peut être également réalisé de manière différente, comme par exemple, l'utilisation de capteurs magnétoélectriques ou des moyens permettant de détecter la chute de tension sur le câble général d'alimentation des commodos.

Le module 22 est constitué des résistances R13, R14, R15, des transistors Q6 et Q3, ainsi que de la bascule U1A ou tout autre équivalent mémoire.

Le module 23 comprend les résistances R18, R16, les transistors Q7, Q8, la diode D4 et le relais RL3 capables de commuter les feux de route.

Le module 25 est constitué :
- Du module 31 effectué par la résistance R25 et le capteur actif LDR2,
- Du module 32 effectué par la résistance R26 et le capteur actif LDR3,
- Du module 34 effectué par l'emploi de la résistance R23, du condensateur C2 et des potentiomètres R19 et R27,
- Du module 33 comprenant les résistances R22, R20, R21 et le condensateur C3,
- Et du module 35 composé d'une partie du composant LM324 ou autre équivalent.

La centrale de pilotage des feux 1 est branchée en apport d'énergie en connexion aux feux de position (veilleuses), croisement (codes), route (phares) en parallèle de la connectique existante permettant l'allumage manuel desdits feux (commodos).

Les capteurs sont placés à l'avant du véhicule, face à la route, à un endroit où la détection est optimale.

L'utilisateur peut mettre en marche ou éteindre la centrale de pilotage 1 par l'interrupteur int1.

La centrale de pilotage 1 ne fonctionne que lorsque le contact du véhicule est activé, le fonctionnement est alors indiqué par un voyant led1.

De plus, l'utilisateur à la possibilité d'activer ou de désactiver par l'interrupteur int2 la fonction automatique de passage codes/phares. Là encore, un voyant led2 confirme l'état du système.

Dans le cas de l'utilisation du système codes/phares automatique, l'utilisateur enclenche tout d'abord les phares par une impulsion sur le commodo phares (fonctionnement habituel des phares).

Dès lors, si un véhicule croise ou précède de moins de 100 mètres (législation) le véhicule équipé, les phares se coupent automatiquement au profit des codes, puis le véhicule gênant ayant disparu (dépassement, croisement...) les feux dits phares se réactivent automatiquement.

Néanmoins, à tout moment, l'utilisateur peut déverrouiller les feux de route par un nouvel appui sur le commodo (similitude de fonctionnement mécanique habituel).

L'utilisateur est donc entièrement maître de ces feux même si la centrale de pilotage 1 est activée (contrairement aux autres systèmes).

On constate que la centrale de pilotage des feux 1 peut être constituée sous la forme d'un kit pouvant être facilement ajouté aux systèmes mécaniques actuellement utilisés sur les véhicules pour l'allumage des feux.

On note que la centrale de pilotage 1 peut être utilisée sur le même principe de l'éclairement extérieur pour équiper tous les systèmes électriques, électroniques, mécaniques, hydrauliques pour la commande par exemple de volets, de vannes d'arrosage, de moteurs électriques.

## Revendications

1. Centrale de pilotage pour la gestion automatique des feux d'un véhicule **caractérisée en ce qu'**elle comporte des moyens de comparaison permettant d'analyser la luminosité extérieure par rapport à des éclairements de références formant des seuils de basculement permettant soit l'allumage, soit l'extinction des différents feux du véhicule et des moyens d'analyse et de gestion de l'état des feux du véhicule en fonction de la position sélectionnée sur le dispositif de commande mécanique connu en soi.

2. Centrale de pilotage pour la gestion automatique des feux d'un véhicule suivant la revendication 1, **caractérisée en ce que** les moyens de comparaison sont constitués d'un premier module (11) qui génère, après filtrage analogique et optique, une tension ou un courant variable (V11), d'un second module (12) qui génère une tension ou un courant (V12) réglable par l'utilisateur afin de définir l'éclairement de référence pour l'allumage des feux du véhicule et d'un troisième module (14) qui compare les tensions ou les courants (V11, V12) issus des deux premier module pour actionner un quatrième module (15) muni d'une interface de puissance pour l'allumage des feux.

3. Centrale de pilotage pour la gestion automatique des feux d'un véhicule suivant la revendication 1, **caractérisée en ce que** les moyens de comparaison sont constitués d'un premier module (11) qui génère, après filtrage analogique et optique, une tension ou un courant variable (V11) proportionnel à la luminosité extérieure et de l'état des feux qui sont, soit allumés, soit éteins pour créer des seuils de déclenchement de l'allumage, d'un second module (12) qui génère une tension ou un courant (V12) réglable par l'utilisateur afin de définir l'éclairement de référence pour l'allumage des feux de position du véhicule, d'un cinquième module (13) qui génère une tension ou un courant (V13) réglable par l'utilisateur permettant de définir l'éclairement de référence pour l'allumage des feux de croisement du véhicule, et d'un troisième module (14) qui compare les tensions ou les courants (V11, V12 et V11, V13) pour actionner un quatrième module (15) muni d'une interface de puissance permettant l'allumage des feux de position et des feux de croisement.

4. Centrale de pilotage pour la gestion automatique des feux d'un véhicule suivant la revendication 1, **caractérisée en ce que** les moyens d'analyse et de gestion sont constitués d'un module (24) qui informe la position sélectionnée correspondant à celle des feux dits phares sur le dispositif de commande mécanique, un module (22) qui analyse les données du module (24) pour bloquer ou débloquer l'allumage des feux dits phares à condition que la centrale de pilotage a enclenchée automatiquement et précédemment les feux de croisement, un module (25) qui gère automatiquement le passage des feux dits phares à ceux de croisement et un module (23) qui commute les courants nécessaires à l'allumage des feux dits phares.

5. Centrale de pilotage pour la gestion automatique des feux d'un véhicule suivant la revendication 4, **caractérisée en ce que** le module (24) est constitué d'un capteur capable de détecter si le dispositif de commande mécanique a été sélectionné par l'utilisateur en position des feux dits phares.

6. Centrale de pilotage pour la gestion automatique des feux d'un véhicule suivant la revendication 4, **caractérisée en ce que** le module (22) est constitué d'un circuit mémoire ou bascule permettant de bloquer ou débloquer l'allumage des feux dits phares.

7. Centrale de pilotage pour la gestion automatique des feux d'un véhicule suivant la revendication 4, **caractérisée en ce que** le module (23) est constitué d'un ensemble de transistors et relais permettant de réaliser l'interface de puissance avec les feux dits phares.

8. Centrale de pilotage pour la gestion automatique des feux d'un véhicule suivant la revendication 4, **caractérisée en ce que** le module (25) est constitué d'un module (31) qui génère une tension (V31) proportionnelle à la luminosité ambiante extérieure à l'avant du véhicule, un module (32) qui génère une tension (V32) proportionnelle à la luminosité ambiante extérieure provenant du véhicule venant en sens inverse ou celui précèdent le véhicule équipé de la centrale de pilotage, un module (33) permettant de mettre en forme le signal du module (32), un autre module (34) permettant de mettre en forme le signal d'un autre module (31), et un module (35) permettant d'effectuer une comparaison différentielle des signaux issus des modules (33 et 34) afin d'établir si les feux dits phares doivent être allumés ou éteins.

9. Centrale de pilotage pour la gestion automatique des feux d'un véhicule suivant la revendication 8, **caractérisée en ce que** le module (33) est constitué d'un étage de filtrage (R22, C3), d'un étage de mise en forme (R21, R20) et d'un filtrage optique.

10. Centrale de pilotage pour la gestion automatique des feux d'un véhicule suivant la revendication 8, **caractérisée en ce que** le module (34) est constitué d'un étage de filtrage (R23, C4), de la prise en compte de l'état des feux dits phares (R27) et d'un ajustement de sensibilité (R19).

11. Centrale de pilotage pour la gestion automatique des feux d'un véhicule suivant la revendication 8, **caractérisée en ce que** le module (35) est constitué d'un amplificateur différentiel LM324 ou équivalent.
